# EUROPEAN PATENT SPECIFICATION

(11) **EP 4 086 032 B1**
(45) Date of publication and mention of the grant of the patent: **14.10.2026**
(21) Application number: 20909411.9
(22) Date of filing: 27.11.2020
(51) Int. Cl.: B23P 19/02, B23Q 1/52

(54) **MULTI-LINK LINKAGE ANGLE ACCESSORY HEAD**
WINKELZUBEHÖRKOPF FÜR EINE MEHRVERBINDUNGSKOPPLUNG
TÊTE D'ACCESSOIRE D'ANGLE DE LIAISON À LIAISONS MULTIPLES

(30) Priority: 31.12.2019 CN 201911419369
(43) Date of publication of application: 09.11.2022
(73) Proprietor: Kede Numerical Control Co., Ltd., Dalian, Liaoning 116000 (CN)
(72) Inventor: CHEN, Hu, Dalian, Liaoning 116000 (CN); DENG, Xin, Dalian, Liaoning 116000 (CN); TANG, Hongtao, Dalian, Liaoning 116000 (CN); DU, Changlin, Dalian, Liaoning 116023 (CN); LI, Yapeng, Dalian, Liaoning 116000 (CN); GUO, Cuijuan, Dalian, Liaoning 116000 (CN); ZHANG, Haibo, Dalian, Liaoning 116000 (CN); SUN, Hongwei, Dalian, Liaoning 116000 (CN); WEI, Zhihong, Dalian, Liaoning 116000 (CN); ZHANG, Guoshuai, Dalian, Liaoning 116000 (CN); LIU, Lixin, Dalian, Liaoning 116000 (CN); WANG, Dawei, Dalian, Liaoning 116000 (CN); DONG, Dapeng, Dalian, Liaoning 116000 (CN); LIN, Meng, Dalian, Liaoning 116000 (CN); LIU, Pei, Dalian, Liaoning 116000 (CN); BAI, Yanqing, Dalian, Liaoning 116000 (CN); LIU, Shaoyi, Dalian, Liaoning 116000 (CN); JU, Zidan, Dalian, Liaoning 116000 (CN)
(74) Representative: JD&P Patent Attorneys Joanna Dargiewicz & Partners
(86) International application number: PCT/CN2020/132123
(87) International publication number: WO 2021/135761

(56) References cited:
- EP-A2- 1 157 777
- EP-B1- 3 359 332
- CN-A- 1 545 440
- CN-A- 101 011 797
- CN-A- 101 011 797
- CN-A- 101 011 798
- CN-A- 110 052 882
- CN-A- 111 036 941
- CN-U- 205 703 290
- CN-U- 211 727 507
- CN-U- 211 727 507
- DE-A1- 102016 116 179

## Description

### TECHNICAL FIELD

The present invention relates to the field of machine tool processing, particularly, to a multi-connecting rod linkage angle attachment head.

### BACKGROUND ART

In the case of deep cavity machining of box parts in the field of aviation such as casings and housings, at present, the common angle attachment heads are generally fixed-angle and lengthened attachment heads. Most of such attachment heads require a manual control of the angle and length of attachment head to realize the machining of parts. None of the above methods can realize the continuous indexing machining of parts, resulting in low machining efficiency. EP 1 157 777 A2 discloses a multi-connecting rod linkage angle attachment head with a connecting rod mechanism that includes two connecting rods.

### SUMMARY OF INVENTION

The present invention provides a multi-connecting rod linkage angle attachment head to overcome the above technical problems.

The present invention provides a multi-connecting rod linkage angle attachment head, including: a casing; a drive mechanism; and a spindle with a cutter fixed at an end.

The drive mechanism includes: a power mechanism, a connecting rod mechanism and a fixing frame for supporting the power mechanism; the fixing frame is fixedly connected to an inner wall of the casing, and the power mechanism is fixedly connected to the fixing frame.

The connecting rod mechanism includes: a first connecting rod, a second connecting rod and a third connecting rod; an end of the first connecting rod is rotatably connected to the fixing frame, and is fixedly connected to an output end of the power mechanism, the other end of the first connecting rod is rotatably connected to an end of the third connecting rod via a first pin, the other end of the third connecting rod is rotatably connected to an end of the second connecting rod via a second pin, the other end of the second connecting rod is fixed on a side wall of the spindle; the second connecting rod and the spindle are rotatably connected to a support bearing fixed in the casing.

The rotation axis of the power mechanism is parallel to the horizontal plane, the rotation axes of the first connecting rod, the second connecting rod and the third connecting rod are all parallel to the rotation axis of the power mechanism; the power mechanism is located above the spindle.

An end of the third connecting rod close to the support bearing is a bent portion for preventing interference with the support bearing.

Further, an included angle a between a central axis of the first connecting rod and a straight line connecting a head end and a tail end of the third connecting rod is in the range of 0°<a<180°.

An included angle b between the straight line connecting the head end and the tail end of the third connecting rod and a central axis of the second connecting rod is in the range of 0°<b<180°; an included angle c between the central axis of the second connecting rod and a central axis of the spindle is in the range of 0°<c<90°.

In the initial state, the central axis of the spindle is located in the first quadrant of the coordinate system, and an included angle θ between the central axis of the spindle and the x-axis is in the range of 0°<θ≤45°; and when the spindle rotates by the maximum angle, the central axis of the spindle is located in the third quadrant of the coordinate system, and the included angle between the central axis of the spindle and the y-axis is y, and the sum of θ and γ is 90°.

Further, the power mechanism includes a servo motor and a reducer.

An output end of the servo motor is connected to an input end of the reducer and an output end of the reducer is fixedly connected to an end of the first connecting rod.

Further, the angle attachment head also includes an angle measurement unit. The angle measurement unit is fixed on an inner side wall of the casing via a reading head bracket, and is located on an outer circular end surface of the support bearing.

Further, the angle attachment head also includes: a T-slot nut; a screw; a through hole; and a T-ring groove.

The second connecting rod is provided with the through hole perpendicular to the spindle, the T-ring groove is provided on a side wall of the spindle close to the second connecting rod, the T-slot nut slides in the T-ring groove, and the screw passes through the through hole and is screwed to the T-slot nut.

The drive mechanism of the present invention is far away from the spindle, and the interference range thereof to the spindle is small. The spindle can be automatically and continuously indexed, and can also perform linkage machining with small cutting amount, and thus, when the spindle swings along a support shaft by the same angle, the volume of the device is reduced; the structure is simple and the manufacturing cost is low.

### BRIEF DESCRIPTION OF DRAWINGS

In order to illustrate the embodiments of the present invention or the technical solutions in the prior art more clearly, the following briefly introduces the accompanying drawings that need to be used in the description of the embodiments or the prior art.
FIG. 1 is an overall schematic diagram of a multi-connecting rod linkage angle attachment head of the present invention.
FIG. 2 is a front view of the multi-connecting rod linkage angle attachment head of the present invention.
FIG. 3 is an overall schematic diagram of the multi-connecting rod linkage angle attachment head of the present invention when a spindle is at an initial position.
FIG. 4 is a schematic diagram of the multi-connecting rod linkage angle attachment head of the present invention when the spindle is rotated to the maximum angle.
FIG. 5 is an enlarged view of A in FIG. 2 of the multi-connecting rod linkage angle attachment head of the present invention.
FIG. 6 is an enlarged view of B in FIG. 2 of the multi-connecting rod linkage angle attachment head of the present invention.

### DESCRIPTION OF EMBODIMENTS

In order to make the purposes, technical solutions and advantages of the embodiments of the present invention clearer, the technical solutions in the embodiments of the present invention will be clearly and completely described below with reference to the accompanying drawings in the embodiments of the present invention.

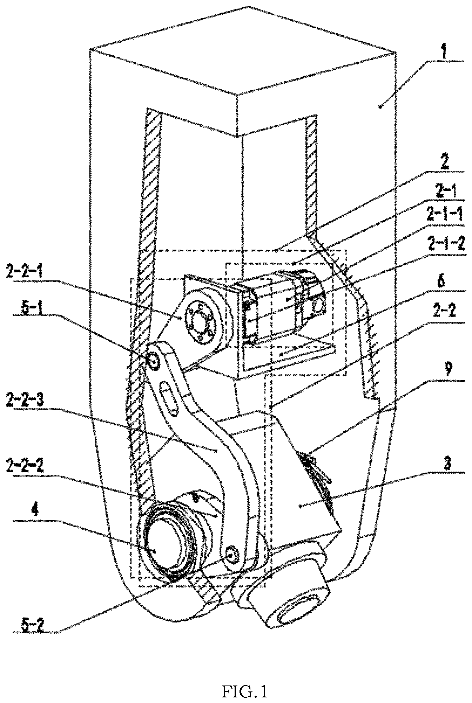

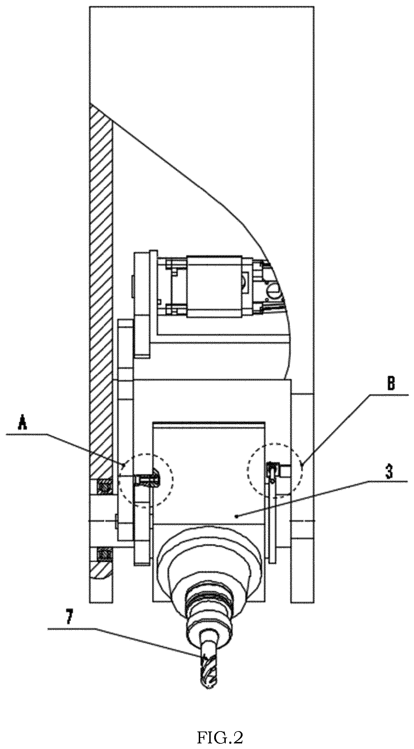

The present invention provides a multi-connecting rod linkage angle attachment head. FIG. 1 is an overall schematic diagram of a multi-connecting rod linkage angle attachment head of the present invention. FIG. 2 is a front view of the multi-connecting rod linkage angle attachment head. The multi-connecting rod linkage angle attachment head includes: a casing 1; a drive mechanism 2; and a spindle 3 with a cutter 7 fixed at an end. The drive mechanism 2 includes: a power mechanism 2-1, a connecting rod mechanism 2-2 and a fixing frame 6 for supporting the power mechanism 2-1. The fixing frame 6 is fixedly connected to an inner wall of the casing 1, and the power mechanism 2-1 is fixedly connected to the fixing frame 6. The casing 1 is a rectangular stainless steel casing as a whole, and a support bearing 4 is laterally fixed at a bottom in the casing 1. The spindle 3 is an electric spindle, the end thereof is fixed with the cutter 7 for machining parts. The cutter 7 rotates synchronously with the spindle 3. The spindle 3 is fixed on an end of the connecting rod mechanism 2-2. The connecting rod mechanism 2-2 is a rotary pair.

The connecting rod mechanism 2-2 includes: a first connecting rod 2-2-1, a second connecting rod 2-2-2 and a third connecting rod 2-2-3. In order to better realize the driving effect, the power mechanism 2-1 includes: a servo motor 2-1-1 and a reducer 2-1-2. An output end of the servo motor 2-1-1 is connected to an input end of the reducer 2-1-2 and an output end of the reducer 2-1-2 is fixedly connected to an end of the first connecting rod 2-2-1 and is rotatably connected to the fixing frame 6. The other end of the first connecting rod 2-2-1 is rotatably connected to an end of the third connecting rod 2-2-3 via a first pin 5-1, and the other end of the third connecting rod 2-2-3 is rotatably connected to an end of the second connecting rod 2-2-2 via a second pin 5-2. The other end of the second connecting rod 2-2-2 is fixed on a side wall of the spindle 3, and the second connecting rod 2-2-2 and the spindle 3 are rotatably connected to the support bearing 4 fixed in the casing 1. The servo motor 2-1-1 drives the first connecting rod 2-2-1 to rotate along the horizontal axis via the reducer 2-1-2. The first connecting rod 2-2-1 drives the third connecting rod 2-2-3 to rotate along the axis of the first pin 5-1. The third connecting rod 2-2-3 drives the second connecting rod 2-2-2 to rotate along the second pin 5-2. The second connecting rod 2-2-2 drives the spindle 3 to rotate around the support bearing 4, and then the support bearing 4 drives the cutter 7 to rotate.

The rotation axis of the power mechanism 2-1 is parallel to the horizontal plane. The rotation axes of the first connecting rod 2-2-1, the second connecting rod 2-2-2 and the third connecting rod 2-2-3 are all parallel to the rotation axis of the power mechanism 2-1. The power mechanism 2-1 is located above the spindle 3. The arrangement of this structure reduces the overall volume of the present invention, and is beneficial to the machining of deep cavities of box parts in the aviation field such as casing and housing.

An end of the third connecting rod 2-2-3 close to the support bearing 4 is a bent portion for preventing interference with the support bearing 4. The bent portion prevents the interference between the third connecting rod 2-2-3 and the support bearing 4, and meanwhile increases the rotation angles of the second connecting rod 2-2-2 and the spindle 3. The drive mechanism of the present invention is far away from the spindle, and the overall size of the structure is small, and the interference range of the drive mechanism to the spindle is small.

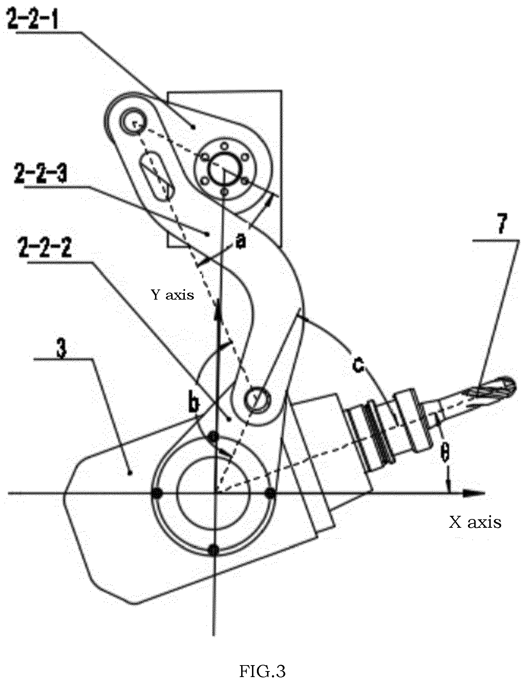

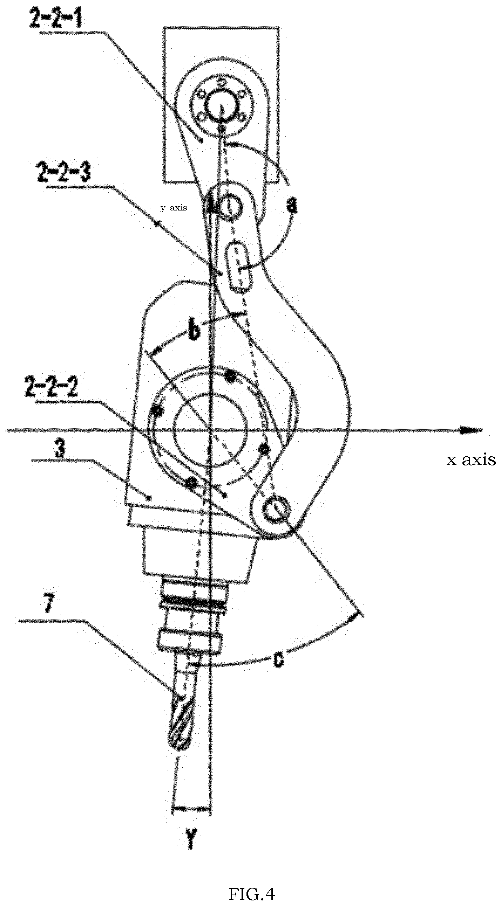

Further, FIG. 3 is an overall schematic diagram of the multi-connecting rod linkage angle attachment head of the present invention when the spindle is at the initial position. FIG. 4 is a schematic diagram of the multi-connecting rod linkage angle attachment head of the present invention when the spindle is rotated to the maximum angle. An included angle a between a central axis of the first connecting rod 2-2-1 and a straight line connecting a head end and a tail end of the third connecting rod 2-2-3 is in the range of 0°<a<180°. An included angle b between the straight line connecting the head end and the tail end of the third connecting rod 2-2-3 and a central axis of the second connecting rod 2-2-2 is in the range of 0°<b<180°; an included angle c between the central axis of the second connecting rod 2-2-2 and a central axis of the spindle 3 is in the range of 0°<c<90°. In this embodiment, θ is preferably 45°. In the initial state, the central axis of the spindle 3 is located in the first quadrant of the coordinate system, and an included angle θ between the central axis of the spindle 3 and the x-axis is in the range of 0°<θ≤45°. When the spindle 3 rotates by the maximum angle, the central axis of the spindle 3 is located in the third quadrant of the coordinate system, and the included angle between the central axis of the spindle 3 and the y-axis is y, and the sum of θ and γ is 90°. That is, if θ is 30°, γ is 60°. The rotation axis position of an end of the first connecting rod 2-2-1 connected to the output end of the servo motor 2-1-1 and the rotation axis position of the spindle 3 are fixed, and thus, when the rotation axis of the first pin 5-1 connecting the third connecting rod 2-2-3 and the first connecting rod 2-2-1 is located just above the rotation axis of an end of the first connecting rod 2-2-1 connected to the output end of the servo motor 2-1-1, the first connecting rod 2-2-1 is at the rotation limit position thereof; when the rotation axis of the second pin 5-2 connecting the third connecting rod 2-2-3 and the second connecting rod 2-2-2 is located just below the rotation axis of the spindle 3, the second connecting rod 2-2-2 is at the rotation limit position thereof. On the premise that the volume and size of the casing 1 are certain, when the above-mentioned angles a, b, and c reach certain values, the rotation angle of the cutter 7 can be maximized, and that is suitable for the large-scale machining on the bottom of deep cavity. With the same volume of the casing 1, the rotation angle of the cutter 7 reaches the maximum.

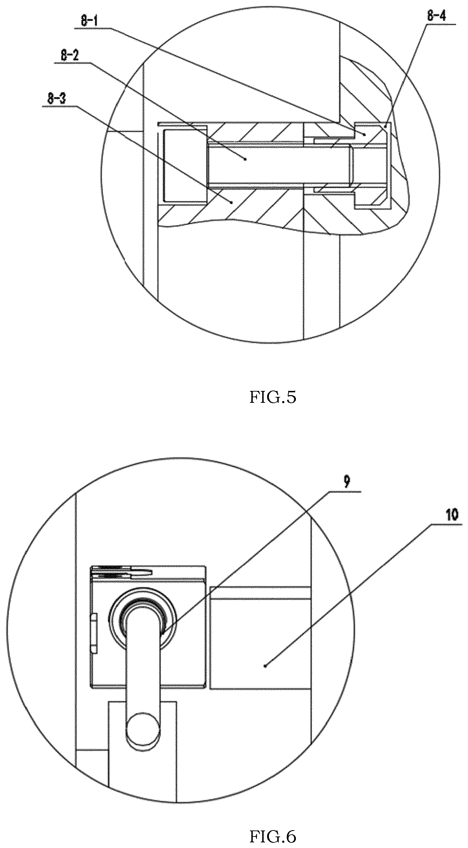

Further, as shown in FIG. 6, the angle attachment head also includes an angle measurement unit 9. The angle measurement unit 9 is fixed on an inner side wall of the casing 1 via a reading head bracket 10, and is located on an outer circular end surface of the support bearing 4. The angle measurement unit 9 is specifically a circular induction synchronizer with small size and high precision. The circular induction synchronizer includes a circular grating ruler and a reading head. The circular grating is used to detect the rotation angle of the spindle 3 to ensure that the cutter 7 is rotated in place (the working principle of the circular induction synchronizer is a prior art and will not be repeated in this application).

Further, in order to make the included angle c between the central axis of the second connecting rod 2-2-2 and the central axis of the spindle 3 adjustable, as shown in FIG. 5, the angle attachment head also includes: a T-slot nut 8-1, a screw 8-2, a through hole 8-3, and a T-ring groove 8-4.

The second connecting rod 2-2-2 is provided with the through hole 8-3 perpendicular to the spindle 3. The T-ring groove 8-4 is provided on a side wall of the spindle 3 close to the second connecting rod 2-2-2. The T-slot nut 8-1 slides in the T-ring groove 8-4, and the screw 8-2 passes through the through hole 8-3 and is screwed to the T-slot nut 8-1. The second connecting rod 2-2-2 is screwed to the T-slot nut 8-1 via the screw 8-2, and slides the T-slot nut 8-1 in the T-ring groove 8-4 to adjust the included angle c between the central axis of the second connecting rod 2-2-2 and the central axis of the spindle 3 to meet different initial angle requirements of the cutter 7.

## Claims

1. A multi-connecting rod linkage angle attachment head, comprising: a casing (1); a drive mechanism (2); and a spindle (3) with a cutter (7) fixed at an end, wherein:
the drive mechanism (2) includes: a power mechanism (2-1), a connecting rod mechanism (2-2) and a fixing frame (6) for supporting the power mechanism (2-1); the fixing frame (6) is fixedly connected to an inner wall of the casing (1), and the power mechanism (2-1) is fixedly connected to the fixing frame (6);
the connecting rod mechanism (2-2) includes: a first connecting rod (2-2-1), a second connecting rod (2-2-2) and a third connecting rod (2-2-3); an end of the first connecting rod (2-2-1) is rotatably connected to the fixing frame (6), and is fixedly connected to an output end of the power mechanism (2-1), the other end of the first connecting rod (2-2-1) is rotatably connected to an end of the third connecting rod (2-2-3) via a first pin (5-1), the other end of the third connecting rod (2-2-3) is rotatably connected to an end of the second connecting rod (2-2-2) via a second pin (5-2), the other end of the second connecting rod (2-2-2) is fixed on a side wall of the spindle (3); the second connecting rod (2-2-2) and the spindle (3) are rotatably connected to a support bearing (4) fixed in the casing (1);
the rotation axis of the power mechanism (2-1) is parallel to the horizontal plane, the rotation axes of the first connecting rod (2-2-1), the second connecting rod (2-2-2) and the third connecting rod (2-2-3) are all parallel to the rotation axis of the power mechanism (2-1); the power mechanism (2-1) is located above the spindle (3);
an end of the third connecting rod (2-2-3) close to the support bearing (4) is a bent portion for preventing interference with the support bearing (4).

2. The angle attachment head according to claim 1, wherein: an included angle a between a central axis of the first connecting rod (2-2-1) and a straight line connecting a head end and a tail end of the third connecting rod (2-2-3) is in the range of 0°<a<180°;
an included angle b between the straight line connecting the head end and the tail end of the third connecting rod (2-2-3) and a central axis of the second connecting rod (2-2-2) is in the range of 0°<b< 180°; an included angle c between the central axis of the second connecting rod (2-2-2) and a central axis of the spindle (3) is in the range of 0°<c<90°;
in the initial state, the central axis of the spindle (3) is located in the first quadrant of the coordinate system, and an included angle θ between the central axis of the spindle (3) and the x-axis is in the range of 0°<θ≤45°; and when the spindle (3) rotates by the maximum angle, the central axis of the spindle (3) is located in the third quadrant of the coordinate system, and the included angle between the central axis of the spindle (3) and the y-axis is y, and the sum of θ and γ is 90°.

3. The angle attachment head according to claim 1, wherein: the power mechanism (2-1) includes a servo motor (2-1-1) and a reducer (2-1-2); and
an output end of the servo motor (2-1-1) is connected to an input end of the reducer (2-1-2) and an output end of the reducer (2-1-2) is fixedly connected to an end of the first connecting rod (2-2-1).

4. The angle attachment head according to claim 1, further comprising: an angle measurement unit (9), wherein the angle measurement unit (9) is fixed on an inner side wall of the casing (1) via a reading head bracket (10), and is located on an outer circular end surface of the support bearing (4).

5. The angle attachment head according to any one of claims 1 to 4, further comprising: a T-slot nut (8-1); a screw (8-2); a through hole (8-3); and a T-ring groove (8-4), wherein
the second connecting rod (2-2-2) is provided with the through hole (8-3) perpendicular to the spindle (3), the T-ring groove (8-4) is provided on a side wall of the spindle (3) close to the second connecting rod (2-2-2), the T-slot nut (8-1) slides in the T-ring groove (8-4), and the screw (8-2) passes through the through hole (8-3) and is screwed to the T-slot nut (8-1).

## Patentansprüche

1. Winkelaufsatzkopf mit Mehrfach-Koppelstangengetriebe, umfassend: ein Gehäuse (1); einen Antriebsmechanismus (2); und eine Spindel (3) mit einem am Ende befestigten Schneidwerkzeug (7), wobei
der Antriebsmechanismus (2) Folgendes umfasst: einen Kraftmechanismus (2-1), einen Koppelstangenmechanismus (2-2) und einen Befestigungsrahmen (6) zur Stützung des Kraftmechanismus (2-1), wobei der Befestigungsrahmen (6) fest mit einer Innenwand des Gehäuses (1) verbunden ist und der Kraftmechanismus (2-1) fest mit dem Befestigungsrahmen (6) verbunden ist,
wobei der Koppelstangenmechanismus (2-2) Folgendes umfasst: eine erste Koppelstange (2-2-1), eine zweite Koppelstange (2-2-2) und eine dritte Koppelstange (2-2-3), wobei ein Ende der ersten Koppelstange (2-2-1) drehbar mit dem Befestigungsrahmen (6) verbunden und fest mit einem Abtriebsende des Kraftmechanismus (2-1) verbunden ist, während das andere Ende der ersten Koppelstange (2-2-1) über einen ersten Bolzen (5-1) drehbar mit einem Ende der dritten Koppelstange (2-2-3) verbunden ist, wobei das andere Ende der dritten Koppelstange (2-2-3) über einen zweiten Bolzen (5-2) drehbar mit einem Ende der zweiten Koppelstange (2-2-2) verbunden ist, wobei das andere Ende der zweiten Koppelstange (2-2-2) an einer Seitenwand der Spindel (3) befestigt ist, wobei die zweite Koppelstange (2-2-2) und die Spindel (3) drehbar mit einem im Gehäuse (1) befestigten Stützlager (4) verbunden sind,
wobei eine Rotationsachse des Kraftmechanismus (2-1) parallel zur Horizontalebene verläuft, wobei die Rotationsachsen der ersten Koppelstange (2-2-1), der zweiten Koppelstange (2-2-2) und der dritten Koppelstange (2-2-3) sämtlich parallel zur Rotationsachse des Kraftmechanismus (2-1) verlaufen, wobei der Kraftmechanismus (2-1) sich oberhalb der Spindel (3) befindet,
wobei ein Ende der dritten Koppelstange (2-2-3) nahe dem Stützlager (4) als Biegeabschnitt zur Vermeidung von Kollisionen mit dem Stützlager (4) ausgebildet ist.

2. Winkelaufsatzkopf nach Anspruch 1, wobei ein eingeschlossener Winkel a zwischen einer Mittelachse der ersten Koppelstange (2-2-1) und einer Geraden, die ein Kopfende und ein unteres Ende der dritten Koppelstange (2-2-3) verbindet, im Bereich von 0° < a < 180° liegt,
wobei ein eingeschlossener Winkel b zwischen der Geraden, die das Kopfende und das untere Ende der dritten Koppelstange (2-2-3) verbindet, und einer Mittelachse der zweiten Koppelstange (2-2-2) im Bereich von 0° < b < 180° liegt, wobei ein eingeschlossener Winkel c zwischen der Mittelachse der zweiten Koppelstange (2-2-2) und einer Mittelachse der Spindel (3) im Bereich von 0° < c < 90° liegt,
wobei im Ausgangszustand sich die Mittelachse der Spindel (3) im ersten Quadranten des Koordinatensystems befindet, wobei ein eingeschlossener Winkel θ zwischen der Mittelachse der Spindel (3) und der x-Achse im Bereich von 0° < θ < 45° liegt, und wobei, wenn die Spindel (3) um den maximalen Winkel rotiert, sich die Mittelachse der Spindel (3) im dritten Quadranten des Koordinatensystems befindet, wobei der eingeschlossene Winkel zwischen der Mittelachse der Spindel (3) und der y-Achse γ ist, wobei die Summe aus θ und γ 90° beträgt.

3. Winkelaufsatzkopf nach Anspruch 1, wobei der Kraftmechanismus (2-1) einen Servomotor (2-1-1) und ein Untersetzungsgetriebe (2-1-2) umfasst, wobei
ein Abtriebsende des Servomotors (2-1-1) mit einem Antriebsende des Untersetzungsgetriebes (2-1-2) verbunden und ein Abtriebsende des Untersetzungsgetriebes (2-1-2) fest mit einem Ende der ersten Koppelstange (2-2-1) verbunden ist.

4. Winkelaufsatzkopf nach Anspruch 1, ferner umfassend: eine Winkelerfassungseinheit (9), wobei die Winkelerfassungseinheit (9) mittels eines Lesekopfhalters (10) an einer inneren Seitenwand des Gehäuses (1) befestigt ist und sich an einer äußeren Stirnfläche des Stützlagers (4) befindet.

5. Winkelaufsatzkopf nach einem der Ansprüche 1 bis 4, ferner umfassend: eine T-Nutmutter (8-1); eine Schraube (8-2); eine Durchgangsbohrung (8-3); und eine T-Ringnut (8-4), wobei
die zweite Koppelstange (2-2-2) mit der zur Spindel (3) senkrechten Durchgangsbohrung (8-3) versehen ist, wobei die T-Ringnut (8-4) an einer Seitenwand der Spindel (3) nahe der zweiten Koppelstange (2-2-2) vorgesehen ist, wobei die T-Nutmutter (8-1) in der T-Ringnut (8-4) gleitet und die Schraube (8-2) durch die Durchgangsbohrung (8-3) geführt und mit der T-Nutmutter (8-1) verschraubt ist.

## Revendications

1. Tête de fixation à angle pour liaison à bielles multiples, comprenant : un boîtier (1) ; un mécanisme d'entraînement (2) ; et une broche (3) pourvue d'un outil de découpe (7) fixé au niveau d'une extrémité, dans laquelle :
le mécanisme d'entraînement (2) comporte : un mécanisme de puissance (2-1), un mécanisme de bielle (2-2) et un cadre de fixation (6) destiné à soutenir le mécanisme de puissance (2-1) ; le cadre de fixation (6) est relié de manière fixe à une paroi interne du boîtier (1), et le mécanisme de puissance (2-1) est relié de manière fixe au cadre de fixation (6) ;
le mécanisme de bielle (2-2) comporte : une première bielle (2-2-1), une deuxième bielle (2-2-2) et une troisième bielle (2-2-3) ; une extrémité de la première bielle (2-2-1) est reliée de manière rotative au cadre de fixation (6) et reliée de manière fixe à une extrémité de sortie du mécanisme de puissance (2-1), l'autre extrémité de la première bielle (2-2-1) est reliée de manière rotative à une extrémité de la troisième bielle (2-2-3) par l'intermédiaire d'une première broche (5-1), l'autre extrémité de la troisième bielle (2-2-3) est reliée de manière rotative à une extrémité de la deuxième bielle (2-2-2) par l'intermédiaire d'une seconde broche (5-2), l'autre extrémité de la deuxième bielle (2-2-2) est fixée sur une paroi latérale de la broche (3) ; la deuxième bielle (2-2-2) et la broche (3) sont reliées de manière rotative à un palier de soutien (4) fixé dans le boîtier (1) ;
l'axe de rotation du mécanisme de puissance (2-1) est parallèle au plan horizontal, les axes de rotation de la première bielle (2-2-1), de la deuxième bielle (2-2-2) et de la troisième bielle (2-2-3) sont tous parallèles à l'axe de rotation du mécanisme de puissance (2-1) ; le mécanisme de puissance (2-1) est situé au-dessus de la broche (3) ;
une extrémité de la troisième bielle (2-2-3) proche du palier de soutien (4) est une partie courbée destinée à empêcher toute interférence avec le palier de soutien (4).

2. Tête de fixation à angle selon la revendication 1, dans laquelle : un angle inclus a entre un axe central de la première bielle (2-2-1) et une ligne droite reliant une extrémité avant et une extrémité arrière de la troisième bielle (2-2-3) est compris dans la plage de 0 °<a<180 ° ;
un angle inclus b entre la ligne droite reliant l'extrémité avant et l'extrémité arrière de la troisième bielle (2-2-3) et un axe central de la deuxième bielle (2-2-2) est compris dans la plage de 0 °<b<180 ° ; un angle inclus c entre l'axe central de la deuxième bielle (2-2-2) et un axe central de la broche (3) est compris dans la plage de 0 °<c<90 ° ;
dans l'état initial, l'axe central de la broche (3) est situé dans le premier quadrant du système de coordonnées, et un angle inclus θ entre l'axe central de la broche (3) et l'axe x est compris dans la plage de 0 °<θ<45 ° ; et lorsque la broche (3) tourne selon l'angle maximal, l'axe central de la broche (3) est situé dans le troisième quadrant du système de coordonnées, et l'angle inclus entre l'axe central de la broche (3) et l'axe y est désigné par γ, et la somme de θ et de γ est de 90 °.

3. Tête de fixation à angle selon la revendication 1, dans laquelle : le mécanisme de puissance (2-1) comporte un servomoteur (2-1-1) et un réducteur (2-1-2) ; et
une extrémité de sortie du servomoteur (2-1-1) est reliée à une extrémité d'entrée du réducteur (2-1-2) et une extrémité de sortie du réducteur (2-1-2) est reliée de manière fixe à une extrémité de la première bielle (2-2-1).

4. Tête de fixation à angle selon la revendication 1, comprenant en outre : une unité de mesure d'angle (9), dans laquelle l'unité de mesure d'angle (9) est fixée sur une paroi latérale interne du boîtier (1) par l'intermédiaire d'un support de tête de lecture (10), et est située sur une surface d'extrémité circulaire externe du palier de soutien (4).

5. Tête de fixation à angle selon l'une quelconque des revendications 1 à 4, comprenant en outre : un écrou à rainure en T (8-1) ; une vis (8-2) ; un trou traversant (8-3) ; et une rainure annulaire en T (8-4), dans laquelle
la deuxième bielle (2-2-2) est pourvue du trou traversant (8-3) perpendiculaire à la broche (3), la rainure annulaire en T (8-4) est prévue sur une paroi latérale de la broche (3) proche de la deuxième bielle (2-2-2), l'écrou à rainure en T (8-1) coulisse dans la rainure annulaire en T (8-4), et la vis (8-2) passe à travers le trou traversant (8-3) et est vissée dans l'écrou à rainure en T (8-1).
